# EUROPEAN PATENT SPECIFICATION

(11) **EP 3 747 952 B1**
(45) Date of publication and mention of the grant of the patent: **06.03.2024**
(21) Application number: 19744142.1
(22) Date of filing: 17.01.2019
(51) Int. Cl.: C08K 3/08, C08K 3/16, B32B 1/02, B32B 7/12, B32B 15/082, B32B 15/085, B32B 15/088, B32B 15/09, B32B 15/18, B32B 15/20, B32B 27/08, B32B 27/20, B32B 27/30, B32B 27/32, B32B 27/34, B32B 27/36

(54) **OXYGEN-ABSORBING RESIN COMPOSITION AND CONTAINER**
SAUERSTOFFABSORBIERENDE HARZZUSAMMENSETZUNG UND BEHÄLTER
COMPOSITION DE RÉSINE ABSORBANT L'OXYGÈNE ET RÉCIPIENT

(30) Priority: 29.01.2018 JP 2018012622
(43) Date of publication of application: 09.12.2020
(73) Proprietor: Toyo Seikan Co., Ltd., Tokyo 141-8640 (JP)
(72) Inventor: ITO, Yusuke, Yokohama-shi, Kanagawa 230-0001 (JP); NYU, Keisuke, Yokohama-shi, Kanagawa 230-0001 (JP)
(74) Representative: Bianchetti & Minoja with Trevisan & Cuonzo IPS SRL
(86) International application number: PCT/JP2019/001274
(87) International publication number: WO 2019/146491

(56) References cited:
- EP-A1- 1 857 475
- WO-A2-2011/112410
- JP-A- H1 180 555
- JP-A- 2000 109 706
- JP-A- 2000 272 673
- JP-A- 2001 149 028
- JP-A- 2001 150 604
- JP-A- 2002 201 352
- US-A1- 2006 069 197
- US-A1- 2010 282 633

## Description

### [Technical Field]

The present invention relates to an oxygen-absorbing resin composition and a container.

### [Technical background]

As the packaging container, metal cans, glass bottles, various plastic containers, and the like are used, but particularly, plastic containers are used for various applications from the viewpoints of lightness, impact resistance, cost, and the like. However, in the case of a metal can or a glass bin, there is almost no oxygen permeation through the container wall, whereas in the case of a plastic container, there is a slight oxygen permeation through the container wall, which has a problem in terms of preservability of the contents. Therefore, a plastic container comprising an oxygen absorbing layer containing an oxygen absorbing agent capable of absorbing oxygen and a resin has been used.

As the oxygen absorber, an iron-based oxygen absorber is generally used (for example, Patent Documents 1 and 2).
WO 2001/112410 discloses a container comprising a layer made of polypropylene having an aluminium content of 2 to 50 ppm.
JP H11 80555 discloses oxygen absorbers disclosed therein include metals belonging to Group 3B, Group 4B, or Group 8 of the Periodic Table, specifically, metallic salts such as aluminium, tin and iron.
US2006069197 discloses oxygen scavenging compositions comprising polyester resins.

### [Prior-art document]

### [Patent Document]

[Patent Document 1] JP-A-H04-90848
[Patent Document 2] JP-A-2007-284632

### SUMMARY OF THE INVENTION

### [Problems to be Solved by the Present invention]

Although the iron-based oxygen absorber described in Patent Documents 1 and 2 have high oxygen absorption performance, there is a case where the oxygen absorption performance is deteriorated when the iron-based oxygen absorber is used with a resin, and further improvement is desired.

It is an object of the present invention to provide an oxygen absorbing resin composition and a container having high oxygen absorbing performance.

### [Means for Solving the Problems]

The present invention is defined by an oxygen-absorbing resin composition according to claim 1.

The container according to the present invention is characterized in that it has an oxygen absorbing layer made of the oxygen absorbing resin composition.

### [Effect of Invention]

According to the present invention, it is possible to provide an oxygen absorbing resin composition and a container having high oxygen absorbing performance.

### [BRIEF DESCRIPTION OF THE DRAWINGS]

[Figure 1] Fig.1 is a cross-sectional view showing an example of a container according to an embodiment of the present invention.
[Fig. 2] Fig.2 are graphs showing the oxygen absorption amount with respect to the aluminum content of Examples 1 to 3 and Comparative Examples 1 to 4.

### [DETAILED DESCRIPTION OF THE PRESENT INVENTION]

### [Oxygen-absorbing resin composition]

The oxygen-absorbing resin composition according to the present invention includes 30% by mass or less of an oxygen absorber containing iron powder and a metal halide, and a resin. Here, the oxygen-absorbing resin composition has a content of aluminum of 50 ppm by mass or less.

In a resin, particularly an olefin-based resin, a catalyst containing aluminum is usually used as a catalyst in its manufacturing process. After the reaction, the catalyst is removed using a neutralizing agent or the like, but a certain amount or more of aluminum is contained as a catalyst residue in the obtained resin.

The present inventors have found that, in an oxygen-absorbing resin composition comprising an oxygen absorber containing iron powder and a metal halide and a resin, when aluminum is contained in a resin in an amount of more than a predetermined amount, the aluminum inhibits the reaction of iron with oxygen and lowers the oxygen absorption performance of iron. Specifically, since aluminum has a higher ionization tendency than iron, aluminum preferentially reacts with oxygen and water than iron, and an oxide film of aluminum is formed. When an oxide film of aluminum is formed on iron powder, it is presumed that the oxygen absorption performance of iron decreases because the reaction between iron and oxygen is inhibited. Accordingly, the present inventors have found that, in an oxygen-absorbing resin composition comprising an oxygen absorber containing iron powder and a metal halide and a resin, by setting the content of aluminum in the composition to 50 ppm by mass or less, the formation of an oxide film of aluminum can be suppressed and the oxygen absorption performance can be improved.

In particular, in the oxygen-absorbing resin composition according to the present invention, since iron can exhibit high oxygen absorption performance, the content of the oxygen absorber in the composition can be reduced, and the production cost can be reduced. Further, as the neutralizing agent used in the step of removing the catalyst in the production of the resin, generally hydrotalcite is used, but since aluminum is contained in the hydrotalcite, it is preferable that the composition does not contain hydrotalcite. Note that, as a neutralizing agent other than hydrotalcite, for example, a metal soap-based neutralizing agent is used. Hereinafter, details of the present invention will be described.

### (Oxygen absorber)

In the present invention, the oxygen absorber includes iron powder and a metal halide. As the iron powder, reduced iron powder, atomized iron powder, electrolytic iron powder, carbonyl iron powder, and the like, known iron powder can be used. Among these, reduced iron powder which is porous and has a relatively large specific surface area, particularly, rotary reduced iron powder, can be suitably used. The rotary reduced iron powder is excellent in oxygen absorption performance because of its high purity and large specific surface area. One type of these iron powders may be used, or two or more types may be used in combination. The content of iron powder in the oxygen absorber is preferably 3 to 40% by mass, more preferably 5 to 30% by mass.

Examples of the halogenated metal include halides such as alkali metals, alkaline earth metals, copper, zinc, and iron. Specific examples thereof include sodium chloride, sodium bromide, sodium iodide, potassium chloride, potassium bromide, potassium iodide, calcium chloride, magnesium chloride, and barium chloride. Among these, sodium chloride is preferred. These metals halides may be used in one kind, and 2 or more kinds thereof may be used in combination.

The metal halide is preferably blended in an amount of 0.1 to 10 parts by mass, more preferably 1 to 5 parts by mass, per 100 parts by mass of iron powder which is a main agent of an oxygen absorber. By blending the metal halide in an amount of 0.1 parts by mass or more per 100 parts by mass of the iron powder, sufficient oxygen absorption performance can be obtained. Further, by blending the metal halide in an amount of 10 parts by mass or less based on 100 parts by mass of the iron powder, it is possible to suppress the decrease in the oxygen absorption performance due to the decrease in the iron powder content, and also to suppress the appearance defect and the adhesion to the contents due to the oozing of the metal halide.

In addition to iron powder and metal halide, the oxygen absorber according to the present invention may further include an alkaline substance. By including an alkaline substance, it is possible to reduce the amount of hydrogen generated by the reaction of iron and water. Examples of the alkaline substance include magnesium hydroxide, calcium hydroxide, strontium hydroxide, barium hydroxide, magnesium carbonate, calcium carbonate, strontium carbonate, and barium carbonate. Of these, calcium hydroxide and calcium oxide, which is a dehydrate of calcium hydroxide, is preferred. These alkaline substances may be used in one kind, and 2 or more kinds thereof may be used in combination.

When the oxygen absorber contains an alkaline substance, the alkaline substance is preferably blended in an amount of 0.5 to 2 parts by mass, more preferably 1 to 2 parts by mass, per 100 parts by mass of the iron powder. By blending the alkaline substance in an amount of 0.5 parts by mass or more based on 100 parts by mass of the iron powder, the amount of hydrogen generated can be sufficiently reduced. Further, by blending an alkaline substance in an amount of 2 parts by mass or less based on 100 parts by mass of iron powder, sufficient oxygen absorption performance can be obtained.

The oxygen absorber can be prepared, for example, by the following method. First, after coarsely pulverizing the iron powder, finely pulverized while mixing by adding a metal halide and, if necessary, an alkaline substance. As a method of mixing and pulverizing, it is possible to employ known means such as a vibration mill, a ball mill, a tube mill, a super mixer. Without simultaneously performing pulverizing and mixing, a method of coating by spraying a solution containing a metal halide and, if necessary, an alkaline substance on the surface of the iron powder prepared to an appropriate particle size may be employed.

Then, after classifying so as to remove coarse particles from the finely pulverized material, heat treatment is performed. The classification operation can be carried out by sieving, wind classification or the like. Heat treatment, together with heat treatment in the presence of oxygen (air), under an inert gas atmosphere, preferably heat treatment under a nitrogen atmosphere is preferably performed in combination. Specifically, heat treatment is performed in the presence of oxygen, it is preferable to perform heat treatment under a nitrogen atmosphere before and/or after the heat treatment step. The heat treatment temperature under an oxygen atmosphere is preferably 400 to 600° C, more preferably 500 to 550° C The heat treatment time is preferably 2 to 12 hours, more preferably 4 to 10 hours. The heat treatment temperature under a nitrogen atmosphere is preferably 400 to 600° C, more preferably 500 to 550° C The heat treatment time is preferably 0 to 6 hours, more preferably 0 to 2 hours. After the heat treatment, it is possible to classify so as to remove coarse particles if necessary, and to obtain an oxygen absorber.

### (Resin)

The resin contained in the oxygen-absorbing resin composition according to the present invention is not particularly limited, but a thermoplastic resin can be used. Specifically, olefin-based resins such as low-, medium-or high-density polyethylene, polypropylene-propylene copolymer, polybutene-1, ethylene-butene-1 copolymer, ethylene-propylene-butene-1 copolymer, polymethylpentene-1, ethylene-vinyl acetate copolymer, ionically crosslinked olefin copolymer (ionomer), ethylene-vinyl alcohol copolymer or blends thereof; styrene-based resin such as polystyrene, styrene-butadiene copolymer, styrene-isoprene copolymer and ABS resin; polyester such as polyethylene terephthalate, polyethylene naphthalate, polytetramethylene terephthalate, glycol-modified polyethylene terephthalate, polylactic acid and polybutylene succinate; polyamide such as nylon 6 and nylon 66; polycarbonate, and the like. Of these, an olefin-based resin is preferred, and polypropylene is more preferred. These resins may be used in one kind, and 2 or more kinds thereof may be used in combination.

### (Method for Producing an Oxygen-Absorbing Resin Composition)

The oxygen absorbing resin composition according to the present invention can be obtained by blending and mixing the oxygen absorbing agent into the resin. Mixing may be melt blending or dry blending. When a small amount of an oxygen absorber is blended, it is preferable to prepare a masterbatch containing an oxygen absorber at a high concentration and mix the masterbatch into a resin.

### (Content of aluminum)

In the oxygen-absorbing resin composition according to the present invention, the resin composition contains aluminum and the content of aluminum is 50 ppm by mass or less. When the content of aluminum exceeds 50 ppm by mass, the oxygen absorption performance decreases. The content of aluminum is preferably 45 ppm by mass or less, more preferably 40 ppm by mass or less, still more preferably 30 ppm by mass or less, and particularly preferably 20 ppm by mass or less. Note that the lower limit of the range of the content of aluminum is not particularly limited, and a smaller content of aluminum is preferable because the reaction between iron and oxygen is not more inhibited. Aluminum content is measured by ICP analyzer (trade name: 720-ES, manufactured by Varian).

I am.

As described above, a catalyst containing aluminum is used as a catalyst at the time of producing a resin, and in some cases, a hydrotalcite containing aluminum is used as a neutralizing agent. Therefore, the content of aluminum of the oxygen-absorbing resin composition can be adjusted to 50 ppm by mass or less by using a resin containing no hydrotalcite or the like using a resin having less catalyst residue.

### (Content of oxygen absorber)

In the oxygen-absorbing resin composition according to the present invention, the content of the oxygen absorber is 30% by mass or less, preferably 10% by mass or more and 30% by mass or less, and still more preferably 20% by mass or more and 27% by mass or less. In the oxygen-absorbing resin composition according to the present invention, since iron can exhibit high oxygen absorption performance, the content of the oxygen absorber in the composition can be reduced to 30% by mass or less, and the production cost can be reduced. In addition, formability and characteristics of the container can be improved.

### [Container]

The container according to the present invention has an oxygen absorbing layer made of an oxygen absorbing resin composition according to the present invention. Since the oxygen absorbing resin composition according to the present invention has high oxygen absorbing performance, the container according to the present invention having an oxygen absorbing layer composed of the composition exhibits high oxygen absorbing performance and exhibits high content storage property. In particular, since the oxygen absorbing layer has high oxygen absorbing performance, the thickness of the oxygen barrier layer and the oxygen absorbing layer can be reduced in the container according to the present invention, and the manufacturing cost can be reduced.

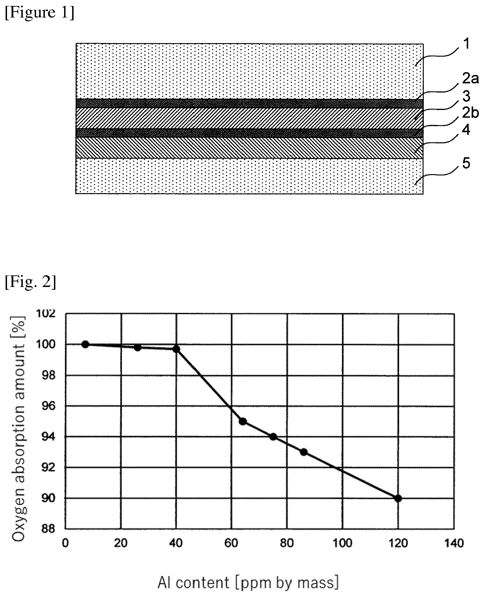

The container according to the present invention is not particularly limited in its configuration as long as it has an oxygen absorbing layer made of an oxygen absorbing resin composition according to the present invention, but preferably has a multilayer structure including the oxygen absorbing layer, and more preferably has a multilayer structure including the oxygen absorbing layer as an intermediate layer. FIG. 1 shows an example of the structure of the container wall of the container according to the present invention. The container shown in FIG. 1 has a layer configuration of outer layer 1/adhesive layer 2a/oxygen barrier layer 3/adhesive layer 2b/oxygen absorbing layer 4/inner layer 5 in order from the outside. Since the oxygen barrier layer 3 is provided outside the oxygen absorbing layer 4, oxygen which cannot be blocked while blocking oxygen permeation from the outside by the oxygen barrier layer 3 can also be absorbed by the oxygen absorbing layer 4 On the other hand, residual oxygen in the container can be absorbed by the oxygen absorbing layer 4 Further, it is preferable that the outer layer 1 and the inner layer 5 contain titanium dioxide. Thus, coloring due to iron powder contained in the oxygen absorbing layer 4 can be hidden.

### (Oxygen absorbing layer)

The oxygen absorbing layer is made of an oxygen absorbing resin composition according to the present invention. The ratio of the mass of the oxygen absorbing layer (mass ratio relating to the thickness) to the mass of the entire container (100% by mass) is preferably 20% by mass or less, more preferably 1% by mass or more and 15% by mass or less, and still more preferably 5% by mass or more and 10% by mass or less. In the oxygen absorbing resin composition according to the present invention constituting the oxygen absorbing layer, since iron can exhibit high oxygen absorbing performance, the ratio can be reduced to 20% by mass or less, and the production cost can be reduced. In addition, the weight of the container can be reduced. The thickness of the oxygen absorbing layer is preferably 5µm or more and 300µm or less, and more preferably 10µm or more and 200µm or less.

### (Oxygen barrier layer)

As a material of the oxygen barrier layer, a gas barrier resin such as a ethylene-vinyl alcohol copolymer, a nylon MXD6, or a polyglycolic acid can be used. Of these, from the viewpoint of high blocking property of oxygen, a ethylene-vinyl alcohol copolymer is preferred. These materials may be used in one kind, and 2 or more kinds thereof may be used in combination. It is also possible to use a mixture of the material and a polyolefin-based resin. A metal foil such as aluminum or steel, an inorganic thin film vapor-deposited film, or a gas barrier coating film obtained by applying a gas barrier material such as polyvinyl alcohol or polyacrylic acid to a base film may be used as an oxygen barrier layer.

It is preferable that the oxygen barrier layer is provided outside the oxygen absorbing layer from the viewpoint of effectively blocking the oxygen before the oxygen permeating from the outside of the container reaches the oxygen absorbing layer. When the oxygen barrier layer contains an ethylene-vinyl alcohol copolymer, the ratio of the mass of the oxygen barrier layer to the mass of the entire container (100% by mass) (mass ratio with respect to thickness) is preferably 10% by mass or less, more preferably 1% by mass or more and 9% by mass or less, and still more preferably 2% by mass or more and 8% by mass or less. In the oxygen absorbing resin composition according to the present invention constituting the oxygen absorbing layer, since iron can exhibit high oxygen absorbing performance, the ratio can be reduced to 10% by mass or less, and the production cost can be reduced. In addition, the weight of the container can be reduced. The thickness of the oxygen barrier layer is preferably 5µm or more and 200µm or less, and more preferably 5µm or more and 150µm or less.

### (Inner layer, outer layer)

The material of the inner layer and the outer layer is not particularly limited, for example, an olefin-based resin such as low-, medium-or high-density polyethylene, polypropylene, ethylene-propylene copolymer, polybutene-1, propylene-butene-1 copolymer, polymethylpentene-1, ethylene-vinyl acetate copolymer, ethylene-(metha) acrylic acid copolymer, an ion crosslinked olefin copolymer (ionomer) or a blend thereof; a polystyrene-based resin such as polystyrene, styrene-butadiene copolymer, styrene-isoprene copolymer and ABS resin; polyester such as polyethylene terephthalate, polyethylene naphthalate, polytetramethylene terephthalate, glycol-modified polyethylene terephthalate, polylactic acid and polybutylene succinate; polyamide such as nylon 6 and nylon 66; polycarbonate, and the like. These materials may be used in one kind, and 2 or more kinds thereof may be used in combination. Further, the material of the inner layer and the material of the outer layer may be the same or different. The thickness of the inner layer and the outer layer is not particularly limited, but may be, for example, 30 to 1000µm.

### (Adhesive layer)

The material of the adhesive layer is not particularly limited, and examples thereof include an ethylene-acrylic acid copolymer, an ion crosslinked olefin copolymer, a maleic anhydride grafted polyethylene, a maleic anhydride grafted polypropylene, an acrylic acid grafted polyolefin, a ethylene-vinyl acetate copolymer, a copolymer polyester, and a copolymer polyamide. These materials may be used in one kind, and 2 or more kinds thereof may be used in combination. The thickness of the adhesive layer is not particularly limited, but may be, for example, 1 to 20µm.

### (Method for manufacturing Containers)

The method for manufacturing a container according to the present invention is not particularly limited. For example, the material corresponding to each layer may be melt-kneaded by an extruder and then extruded into a predetermined shape through a multilayer multi-die such as a T-die or a circular die. The materials may be melted and kneaded by an injector corresponding to each layer, and then co-injected or sequentially injected into an injection mold to produce a multilayer container or a preform for the container. Further, a lamination method such as dry lamination, sandwich lamination, extrusion coating, or the like may be employed.

The molding can be a film, sheet, bottle or tube forming parison, or a pipe, bottle or tube forming preform, or the like. The formation of bottles from parisons, pipes or preforms is facilitated by pinching off the extrudate in a pair of split molds and blowing fluid into the interior. Also, after cooling the pipe or preform, it is heated to the drawing temperature, stretched in the axial direction, and blow-stretched in the circumferential direction by fluid pressure to obtain a stretch blow bottle. In addition, a cup-shaped container, a tray-shaped container, or the like can be obtained by performing vacuum molding, pneumatic molding, overhang molding, plug assisted molding, or the like on the film or the sheet. Further, in the case of a multilayer film, it can be superposed or folded in a bag shape, and the periphery can be heat-sealed into a bag-shaped container.

### (Usage)

Since the container according to the present invention is excellent in oxygen absorption performance, it can be suitably used as a container for example, cooked rice, coffee, soup, or the like.

### [EXAMPLES]

Hereinafter, the present invention will be described more specifically by way of Examples. The oxygen absorbing performance of the oxygen absorbing resin composition pellets and the container obtained in each of the examples was evaluated by the following method.

### [Evaluation of Oxygen Absorption Performance of Oxygen Absorbing Resin Composition Pellets]

3g of an oxygen-absorbing resin composition pellet and 1ml of distilled water were placed inside a gas-impermeable plastic cup container having an inner volume of 85ml laminated with steel foil so that both of them did not come into contact with each other. Thereafter, a gas impermeable metal foil laminate film was used to heat seal and seal the container in air. After 1-day storage of the container at 50° C, the oxygen concentration inside the container was measured using a gas chromatograph (trade name: CP4900, manufactured by Agilent). From the obtained measurement results, the amount of oxygen absorption per mass of the oxygen absorbing resin composition pellets was calculated. The results are given in Table 1. In Table 1, the oxygen absorption amount was shown as a relative ratio (unit: %) when the oxygen absorption amount of the oxygen absorbing resin composition pellet (aluminum content: 7 ppm by mass) of Example 1 was set to 100.0%

### [Evaluation of Container Content Storability]

Rice was placed inside the container, and the container was heat sealed under an oxygen concentration atmosphere of 1% using a gas impermeable metal foil laminate film and sealed. At this time, the effective area of the container was 220 cm², and the head space inside the container was 50ml. After storing the container for 300 days in 23° C, 50% RH, the oxygen concentration inside the container was measured using a gas chromatograph (trade name: CP4900, manufactured by Agilent). Content preservability was evaluated from the oxygen concentration in the container after storage according to the following criteria. The results are given in Table 2.
o: Oxygen concentration in the container after storage is less than 1%.
△: The oxygen concentration in the container after storage is 1% or more and less than 1.15%
×: The oxygen concentration in the container after storage is 1.15% or more.

### [EXAMPLE 1]

### (Preparation of Oxygen Absorbent)

100 parts by mass of rotary reduced iron powder (metal iron amount 90% by mass, average particle diameter 45µm), 2 parts by mass of sodium chloride and 1 parts by mass of calcium hydroxide were mixed, and pulverization treatment was performed for 10 hours using a vibration ball mill. Thereafter, the coarse particles of 90µm or more were removed by classifying with a sieve of 180mesh to obtain a mixed finely pulverized product. The obtained mixed pulverized product (50kg) was filled in a batch type rotary furnace having an internal volume of 230L, and heat treatment was performed for 8 hours under the conditions of 6rpm rotation speed, 10 L/min nitrogen gas flow rate, and 550° C. (2 hours for temperature rise and 8 hours for cooling). In the heat treatment, air was flowed at a flow rate of 10 L/min for 6 hours instead of nitrogen gas, thereby promoting the surface oxidation. Thereafter, coarse particles of 90µm or more were removed by classification with a sieve of 180mesh to obtain an oxygen absorber.

### (Preparation of Oxygen-absorbing Resin Composition Pellets)

29 parts by mass of the oxygen absorbing agent and 71 parts by mass of random polypropylene (random PP) (density: 0.91 g/cm³, melt index (MI): 0.6g/10 min, 230° C.) were melt-kneaded by a twin screw extruder (trade name: TEM-35B, manufactured by Toshiba Machinery) and molded to produce oxygen absorbing resin-composition pellets. The aluminum content of the oxygen-absorbing resin composition pellets was 7 ppm by mass. Incidentally, the aluminum content was measured by ICP analyzer (trade name: 720-ES, manufactured by Varian). With respect to the obtained oxygen-absorbing resin composition pellets, the oxygen absorption performance was evaluated by the above method. The results are shown in Table 1 and Figure 2.

### [Examples 2 and 3, Comparative Examples 1 to 4] Example 3 is a reference embodiment, not according to the invention.

An oxygen-absorbing resin composition pellet was prepared and evaluated in the same manner as in Example 1, except that the aluminum content of the oxygen-absorbing resin composition pellet was changed as shown in Table 1 by changing the random PP used in the preparation of the oxygen-absorbing resin composition pellet. The results are shown in Table 1 and Figure 2.

**Table 1**

| | Al content (ppm by mass) | oxygen absorption amount (%) |
|---|---|---|
| Example 1 | 7 | 100.0 |
| Example 2 | 26 | 99.8 |
| Example 3 | 60 | 99.7 |
| Comparative Example 1 | 64 | 95.0 |
| Comparative Example 2 | 75 | 94.0 |
| Comparative Example 3 | 89 | 93.0 |
| Comparative Example 4 | 120 | 90.0 |

### [EXAMPLE 4]

In the preparation of the oxygen-absorbing resin composition pellets in Example 1, an oxygen-absorbing resin composition pellet (aluminum content: less than 10 ppm by mass) substantially free of aluminum was prepared by changing the random PP used. Further, a ethylene-vinyl alcohol copolymer (EVOH, ethylene content: 32 mol%, saponification degree: 99.6 mol%) as a material of the oxygen barrier layer, a white block polypropylene (white block PP) containing 8% by mass of titanium white pigment as a material of the inner layer and the outer layer, and a maleic anhydride-modified polypropylene (maleic anhydride-modified PP) (MI:1.0g/10min, 230° C.) as a material of the adhesive layer were prepared.

These materials were used to produce four-type six-layer sheets (outer layer (40% by weight)/adhesive layer (2% by weight)/oxygen barrier layer (7% by weight)/adhesive layer (2% by weight)/oxygen absorbing layer (7% by weight)/inner layer (42% by weight)) having a thickness of 500µm by a molding apparatus consisting of a single screw extruder, a feed block, a T-die, a cooling roll, and a sheet take-up apparatus. The obtained sheet in a vacuum molding machine, subjected to deep drawing molding using a multi-piece molding die, the aperture outer diameter 140× 105mm, a height 40mm, to mold the multilayer deep drawing container of the content 330ml. The obtained container was evaluated for content preservability by the above method. The results are given in Table 2.

### [EXAMPLE 5]

A container was prepared and evaluated by the same method as in Example 4, except that the layer configuration was changed to an outer layer (40% by mass)/an adhesive layer (2% by mass)/an oxygen barrier layer (6% by mass)/an adhesive layer (2% by mass)/an oxygen absorbing layer (7% by mass)/an inner layer (43% by mass) The results are given in Table 2.

### [EXAMPLE 6]

A container was prepared and evaluated by the same method as in Example 4, except that 26 parts by mass of the oxygen absorber and the random PP 74 parts by mass were used in preparing the oxygen absorbing resin composition pellets. The results are given in Table 2.

### [Comparative Example 5]

In the preparation of the oxygen-absorbing resin composition pellets, an oxygen-absorbing resin composition pellet containing 140 ppm by mass or more of aluminum was prepared by changing the random PP used. A container was prepared and evaluated by the same method as in Example 4, except that the oxygen-absorbing resin composition pellets were used. The results are given in Table 2.

**Table 2**

| | Oxygen absorbing layer | | Mass % of oxygen barrier layer (% by mass) | Evaluation of Content Storability |
|---|---|---|---|---|
| | Al content (ppm by mass) | Oxygen absorber content (% by mass) | | |
| Example 4 | <10 | 29 | 7 | ○ |
| Example 5 | <10 | 29 | 6 | Δ |
| Example 6 | <10 | 26 | 7 | Δ |
| Comparative Example 5 | ≧ 140 | 29 | 7 | × |

### [Description of Symbols]

1 Outer layer
2a, 2b adhesive layers
3 Oxygen barrier layer
4 Oxygen absorbing layer
5 Inner layer

## Claims

1. An oxygen-absorbing resin composition comprising an oxygen absorber containing iron powder and a metal halide and an olefin-based resin, **characterized in that** the oxygen-absorbing resin composition contains aluminum and a content of the aluminum is 50 ppm by mass or less.

2. The oxygen-absorbing resin composition according to claim 1 or 2, wherein the oxygen-absorbing resin composition does not contain hydrotalcite.

3. A container comprising an oxygen absorbing layer (4) made of the oxygen absorbing resin composition according to any one of claims 1 to 2.

4. The container of claim 3, further comprising an oxygen barrier layer (3) comprising an ethylene-vinyl alcohol copolymer outside the oxygen absorbing layer (4).

5. The container according to claim 4 , wherein a ratio of a mass of the oxygen barrier layer (3) to a mass of the entire container is 10% by mass or less.

6. The container according to any one of claims 3 to 5, wherein the ratio of the mass of the oxygen absorbing layer (4) to the mass of the entire container is 20% by mass or less.

## Patentansprüche

1. Sauerstoffabsorbierende Harzzusammensetzung, umfassend einen Sauerstoffabsorber, der Eisenpulver und ein Metallhalogenid enthält, und ein Harz auf Olefinbasis, **dadurch gekennzeichnet, dass** die sauerstoffabsorbierende Harzzusammensetzung Aluminium enthält und der Gehalt des Aluminiums 50 ppm nach Masse oder weniger beträgt.

2. Sauerstoffabsorbierende Harzzusammensetzung nach Anspruch 1 oder 2, wobei die sauerstoffabsorbierende Harzzusammensetzung kein Hydrotalcit enthält.

3. Behälter, umfassend eine sauerstoffabsorbierende Schicht (4) aus der sauerstoffabsorbierenden Harzzusammensetzung nach einem der Ansprüche 1 bis 2.

4. Behälter nach Anspruch 3, ferner umfassend eine Sauerstoffsperrschicht (3), die ein Ethylen-Vinylalkohol-Copolymer außerhalb der sauerstoffabsorbierenden Schicht (4) umfasst.

5. Behälter nach Anspruch 4, wobei das Verhältnis der Masse der Sauerstoffsperrschicht (3) zur Masse des gesamten Behälters 10 Massenprozent oder weniger beträgt.

6. Behälter nach einem der Ansprüche 3 bis 5, wobei das Verhältnis der Masse der sauerstoffabsorbierenden Schicht (4) zur Masse des gesamten Behälters 20 Massenprozent oder weniger beträgt.

## Revendications

1. Composition de résine absorbant l'oxygène comprenant un absorbeur d'oxygène contenant une poudre de fer et un halogénure de métal et une résine à base d'oléfine, **caractérisée en ce que** la composition de résine absorbant l'oxygène contient de l'aluminium et une teneur en aluminium est de 50 ppm en masse ou moins.

2. Composition de résine absorbant l'oxygène selon la revendication 1 ou 2, dans laquelle la composition de résine absorbant l'oxygène ne contient pas d'hydrotalcite.

3. Récipient comprenant une couche absorbant l'oxygène (4) faite de la composition de résine absorbant l'oxygène selon l'une quelconque des revendications 1 à 2.

4. Récipient selon la revendication 3, comprenant en outre une couche de barrière d'oxygène (3) comprenant un copolymère éthylène-alcool vinylique à l'extérieur de la couche absorbant l'oxygène (4).

5. Récipient selon la revendication 4, dans lequel un rapport d'une masse de la couche de barrière d'oxygène (3) à une masse du récipient entier est de 10 % en masse ou moins.

6. Récipient selon l'une quelconque des revendications 3 à 5, dans lequel le rapport de la masse de la couche absorbant l'oxygène (4) à la masse du récipient entier est de 20 % en masse ou moins.
